# EUROPÄISCHE PATENTANMELDUNG

(11) **EP 2 568 141 A1**
(43) Veröffentlichungstag der Anmeldung: **13.03.2013**
(21) Anmeldenummer: 11180677.4
(22) Anmeldetag: 09.09.2011
(51) Int. Cl.: F02C 3/13, F02C 7/26, F02C 9/18, F02C 9/52

(54) **Verfahren zum Beschleunigen des Rotors einer stationären Gasturbine auf Nenndrehzahl**

(71) Anmelder: Siemens Aktiengesellschaft, 80333 München (DE)
(72) Erfinder: Engler, Thorsten, 47447 Moers (DE); Köstlin, Berthold, 47057 Duisburg (DE); Schildmacher, Kai-Uwe, 45481 Mülheim a.d. Ruhr (DE)

(57) **Zusammenfassung**

Die Erfindung betrifft ein Verfahren zum Beschleunigen des Rotors (14) einer stationären Gasturbine (10) mit einem Verdichter (18) auf Nenndrehzahl (n₀), bei dem vor Erreichen der Nenndrehzahl (n₀) der Rotor (14) von einem externen Drehantrieb bis zu einer vorbestimmten Rotordrehzahl angetrieben und währenddessen gasförmiger Brennstoff innerhalb der Gasturbine (10) bei einer ersten Rotordrehzahl gezündet und danach der Gasturbine (10) kontinuierlich zugeführte gasförmige Brennstoff zu einem den Rotor (14) antreibenden Heißgas (M) verbrannt wird und Verdichterluft (34) durch mindestens eine Abblaseleitung (42, 43) in einen Abgaskanal (26) der Gasturbine (10) abgeblasen wird. Um einerseits unerwünschte Verbrennungsschwingungen während des Hochfahrens zu vermeiden und andererseits gleichzeitig den Versorgungsdruck im Erdgasversorgungsnetz weiter reduzieren zu können, ist vorgesehen, dass bis zum Erreichen der Nenndrehzahl (n₀) ein Anteil (m_{Ai}) der Verdichterendluft in einem Ansaugkanal (16) des Verdichters (18) rückgeführt wird und der Massenstrom durch den Verdichter kleiner ist als 60% des Nennmassenstroms bei Nennlast der Gasturbine (10).

## Beschreibung

Stationäre Gasturbinen und Verfahren zum Betrieb der Gasturbinen sind aus dem Stand der Technik in umfangreicher Art und Weise bekannt. Gasturbinen moderner Bauart, welche zur Erzeugung elektrischer Energie eingesetzt werden, weisen in der Regel einen axial durchströmbaren Verdichter, eine oder mehrere Brennkammern und eine Turbineneinheit auf. Im Betrieb wird ein der Brennkammer zugeführter Brennstoff mit Hilfe der vom Verdichter verdichteten Umgebungsluft zu einem Heißgas verbrannt, welches sich in der Turbineneinheit an dem Rotor der Gasturbine arbeitsleistend entspannt. Der Rotor treibt dann einen Generator an, welcher die mechanische Energie in elektrische Energie verlustarm umwandelt und in ein Stromverteilungsnetz einspeist.

Beim Starten der Gasturbine - dem so genannten Anfahren oder Hochfahren - wird dessen Rotor mit Hilfe einer Antriebsvorrichtung auf eine Zünddrehzahl gebracht, wonach durch Einspeisen eines Pilot-Brennstoffstroms in die Brennkammer dieser gezündet wird. Anschließend zündet die Pilotflamme einen Haupt-Brennstoffstrom, welcher über separate Brenner und/oder Brennstoffdüsen auch in die Brennkammer(n) einspritzt wird. Mit Erreichen der Nenndrehzahl, zumeist 3000 min⁻¹ oder 3600 min⁻¹, endet der Startvorgang der Gasturbine. Anschließend kann der Generator mit der Netzfrequenz des Stromverteilungsnetzes synchronisiert und diesem aufgeschaltet werden.

Die Zuführung von Pilot-Brennstoff und Haupt-Brennstoff zu den entsprechenden Brennern bzw. Düsen erfolgt über getrennt arbeitende Leitungssysteme mit darin angeordneten Ventilen, mit denen sich das Volumen des jeweilig zugeführten Brennstoffs und dessen Druck einstellen lässt. Als Brennstoff werden sowohl flüssige als auch gasförmige Brennstoffe verwendet. Zur Erzeugung einer besonders effizienten und emissionsarmen Verbrennung in der Brennkammer ist es bekannt, die Verbrennung des Haupt-Brennstoffmassenstroms durch die Pilotflamme stetig zu unterstützen. Als Pilotbrennstoff wird häufig ein Brenngas, beispielsweise Erdgas verwendet.

Aufgrund der zur Erzeugung von großen Mengen an elektrischer Energie erforderlichen großen Mengen an gasförmigem Brennstoff sind die Brennstoffleitungssysteme der Gasturbine häufig an ein Brennstoffnetz angeschlossen, aus welchem der Brennstoff in der benötigten Menge über einen längeren Zeitraum entnommen werden kann. Ggf. ist zwischen dem Brennstoffnetz und dem Brennstoffleitungssystem noch ein zusätzlicher Gaskompressor geschaltet, um den Versorgungsdruck des Brennstoffnetzes zuverlässig auf ein höheres Maß anzuheben, mit dem ein sicherer Betrieb der Gasturbine gewährleistet werden kann. Der erforderliche Brennstoffdruck beim Einspeisen in die Brennkammer liegt oberhalb des vom Verdichter der Gasturbine geleisteten Druckverhältnisses. Folglich wird der Brennstoffdruck so eingestellt, dass Brennstoff in der erforderlichen Menge auch tatsächlich in die Brennkammer einströmt. Der vom Brennstoffnetz bereitzustellende bzw. vom zusätzlichen Gasverdichter zu liefernde Versorgungsdruck kann sogar weit oberhalb des vom Verdichter geleisteten Druckverhältnisses liegen, da insbesondere beim Beschleunigen des Rotors auf die Nenndrehzahl und bei Lastabwurf sehr große Mengen an Pilot-brennstoff benötigt werden, um die Hauptflamme zu stabilisieren und unerwünschte thermoakustische Schwingungen sowie Flammverlöschen sicher zu vermeiden. Pilotbrenner, welche eine vorgemischte Flamme erzeugen - sogenannte Vormischpilotbrenner - weisen zudem vergleichsweise kleine Gasaustrittsbohrungen auf, welche eine weitere Erhöhung des ohnehin schon hohen Gasversorgungsdrucks erforderlich machen, um die geforderten Pilotgasmassenströme zu erreichen. Dies steht im Gegensatz zu dem Bedürfnis nach einer effizienten Betriebsmöglichkeit der Gasturbine auch bei reduziertem Versorgungsdruck im Brennstoffnetz.

Aus den vorgenannten Gründen besteht das Bestreben, während des Hochfahrens Brennkammerbeschleunigung und eine unzureichende sowie emissionsstarke Verbrennung selbst bei geringen Brennstoffversorgungsdrücken zu vermeiden.

Zudem ist es aus dem Buch "Stationäre Gasturbinen" von Christoph Lechner und Jörg Seume (Herausgeber) bekannt, beim Anfahren von Gasturbinen die Stufenbelastung in Gasturbinenverdichtern zu reduzieren, indem durch Abblasen von Luft aus entsprechenden Entnahmestellen die Luftmenge im Verdichter und damit die Durchtrittsgeschwindigkeit in den hinteren Stufen des Verdichters gesenkt wird. Die Abblasung erfolgt direkt über einen Schalldämpfer in die Umgebung oder über Rohrleitungen in das Abgassystem der Gasturbine. Die Entnahmestellen sind dabei häufig als die im Verdichter statorseitig angeordneten Kühlluftentnahmen ausgebildet. Gleichzeitig ist es möglich, mit Hilfe der Verstellung der Eingangsleitschaufeln des Verdichters den Massenstrom beim Anfahren etwas zu reduzieren, was ebenfalls die Stufenbelastung reduziert.

Aufgabe der Erfindung ist die Bereitstellung eines Verfahrens zum Anfahren einer stationären Gasturbine, welches besonders effizient und schnell durchführbar ist und mit dem die aus dem Stand der Technik bekannten Probleme verringert oder gar vermieden werden können.

Die auf das Verfahren gerichtete Aufgabe wird mit einem solchen gemäß den Merkmalen des Anspruchs 1 gelöst. Vorteilhafte Ausgestaltungen der Erfindung sind in den Unteransprüchen angegeben, die in beliebiger Weise miteinander kombiniert werden können.

Der Erfindung liegt die Erkenntnis zugrunde, dass ein wesentlicher Beitrag zur Reduktion des Brennstoffmassenstroms beim Start durch die Verbesserung des Ausbrandverhaltens beim Start erreicht werden kann. Dabei wird das Ausbrandverhalten im Wesentlichen von der Primärzonentemperatur bestimmt. Um den Ausbrand zu erhöhen, muss das Verfahren folglich eine höhere Flammentemperatur ermöglich. Da aufgrund der vorgegebenen Randbedingungen der Pilotgasmassenstrom aufgrund des geringeren Vordrucks nicht weiter erhöht werden kann, muss die Luftmenge durch die Brennkammer weiter reduziert und/oder zusätzlich erwärmt werden. Erfindungsgemäß ist vorgesehen, dass ein Anteil der Verdichterluft in einen Ansaugkanal des Verdichters rückgeführt wird und der Massenstrom durch den Verdichter (am Ende des Austritts) kleiner ist als 60%, vorzugsweise 50% des Nennmassenstroms des Verdichters (bei Nennleistung der Gasturbine). Die Reduzierung des Massenstroms durch den Verdichter wird durch weiteres Zudrehen der verstellbaren Einlassleitschaufeln erreicht.

Da die im Stand der Technik auftretenden Störverhalten zumeist kurz vor Erreichen der Nenndrehzahl auftreten, ist es von Vorteil, wenn diese auch in einem Zeitfenster von ca. 20 Sekunden vor Erreichen der Nenndrehzahl durchgeführt werden. Mit bzw. nach dem Erreichen der Nenndrehzahl können diese Maßnahmen wieder deaktiviert werden. Mit Hilfe der beschriebenen Maßnahmen kann die Primärzonentemperatur erhöht werden, was einen besseren Ausbrand bedingt. Hierdurch wird bei vergleichbarem Brennstoffmassenstrom mehr thermische Energie freigesetzt. Anders formuliert: bei schlechterem Ausbrandverhalten käme dies einer Erhöhung der Brennstoffmenge gleich. Da letztgenannte Maßnahme jedoch mit Hilfe der Erfindung vermieden werden kann, ermöglicht das Verfahren einerseits die Absenkung des Versorgungsdrucks im Gasversorgungsnetz und andererseits geringere Anfahremissionen unter Vermeidung von ungewünschten Verbrennungsinstabilitäten.

Vorzugsweise erfolgt die Rückführung eines Anteils von Verdichterendluft in den Ansaugkanal unabhängig von der Umgebungstemperatur der Gasturbine. Da diese Maßnahme zum Teil während des bestimmungsgemäßen Betriebs der Gasturbine zur Vermeidung von Eisbildung in den vorderen Verdichterstufen vorgesehen ist, eignet sich diese Maßnahme selbstverständlich auch zur Temperaturanhebung der angesaugten Luft und somit zur Temperaturanhebung der Flammentemperatur, um die gewünschten Ziele - besseres und stabileres Ausbrandverhalten bei geringeren Emissionen - zu erreichen.

Gemäß einer weiteren bevorzugten Ausführungsform des Verfahrens beginnt die Rückführung des Anteils von Verdichterendluft in den Ansaugkanal des Verdichters erst ab einer Drehzahl von 50% der Nenndrehzahl. Mithin wird die Rückführung des Anteils von Verdichterendluft in den Ansaugkanal selbst dann durchgeführt, wenn keine Gefahr des Vereisens des Verdichters besteht.

Gemäß einem weiteren vorteilhaften Verfahrensschritt ist vorgesehen, dass zur Beschleunigung des Rotors auf Nenndrehzahl nur gasförmiger Brennstoff verbrannt wird und erst nach dem Erreichen der Nenndrehzahl mit der Beendigung des Abblasens begonnen wird.

Mit Hilfe der insgesamt vorgeschlagenen Maßnahmen, die alle gemeinschaftlich wesentlich zur Verbesserung des Ausbrandverhaltens durch Erhöhung der Flammentemperatur beitragen, ist es möglich, den ursprünglich benötigten Pilotgas-Versorgungsdruck signifikant zu reduzieren.

Weitere Vorteile und Merkmale der Erfindung werden im nachfolgenden Ausführungsbeispiel näher erläutert.

Es zeigen:
- FIG 1: eine Gasturbine in einem Längs-Teilquerschnitt;
- FIG 2: ein kombiniertes Abgastemperatur-/Abgasmassenstrom-/ Brennstoffmassenstrom-Drehzahldiagramm mit der Darstellung ihrer Größen während des Beschleunigens des Rotors einer stationären Gasturbine auf Nenndrehzahl.

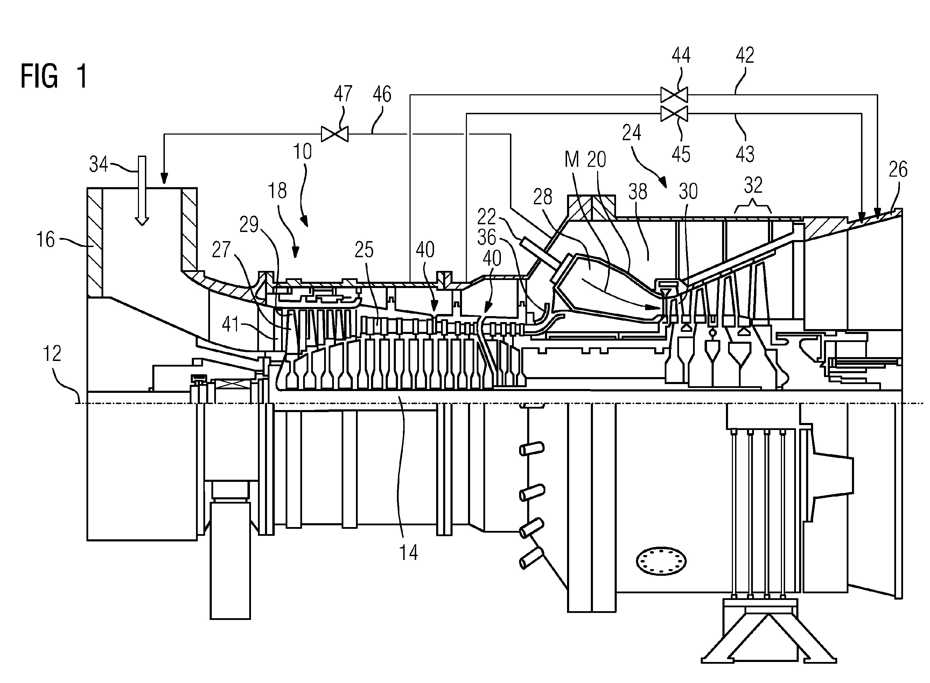

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26. Anstelle der Ringbrennkammer 20 kann die Gasturbine 10 auch mit anders gestalteten Brennkammern ausgestattet sein.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand des Verdichterkanals 25 gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

Des Weiteren umfasst der Verdichter 18 zwei statorseitige Entnahmen 40. Über diese beiden Entnahmen 40 kann dem Verdichter 18 ein Anteil der angesaugten Luft 34 entnommen werden. Der entnommene Anteil wird während des bestimmungsgemäßen Betriebs der Gasturbine 10 zur Kühlung von Heißgasbauteilen wie Brennkammer 20, Turbinenschaufeln und Führungsringen eingesetzt. Während des Anfahrens der Gasturbine kann die dem Verdichter 18 dort entnommene Luft über zwei separate Abblaseleitungen 42, 43 in den Abgaskanal 26 abgeführt werden. Dazu sind in den Abblaseleitungen 42, 43 angesiedelte Stellorgane 44, 45, welche zumeist als regelbare Klappen oder auch als Auf-/Zu-Klappen ausgestaltet sind, vorgesehen. Eine weitere Leitung 46 mit einem darin angeordneten Stellorgan 47 verbindet das Plenum 38 mit dem Ansaugkanal 16 des Verdichters 18, um während des bestimmungsgemäßen Betriebs der Gasturbine 10 das Vereisen von vorderen Verdichterstufen zu verhindern. Sobald aufgrund vergleichsweise geringer Umgebungstemperaturen ein Vereisen der vorderen Verdichterstufen auftreten kann, wird das Stellorgan 47 so weit geöffnet, bis ein signifikanter Anteil des Verdichtermassenstroms über die Leitung 46 dem Ansaugkanal 16 wieder zugeführt werden kann. Da aufgrund der Verdichtung der Umgebungsluft diese auf mehrere hundert Grad angeheizt wird, kann durch die Rückführung der so erwärmten Verdichterendluft über die Leitung 46 der hauptsächliche Anteil der angesaugten Luft 34 vorgewärmt werden, wodurch das Vereisen während des Betriebs der Gasturbine sicher vermieden wird.

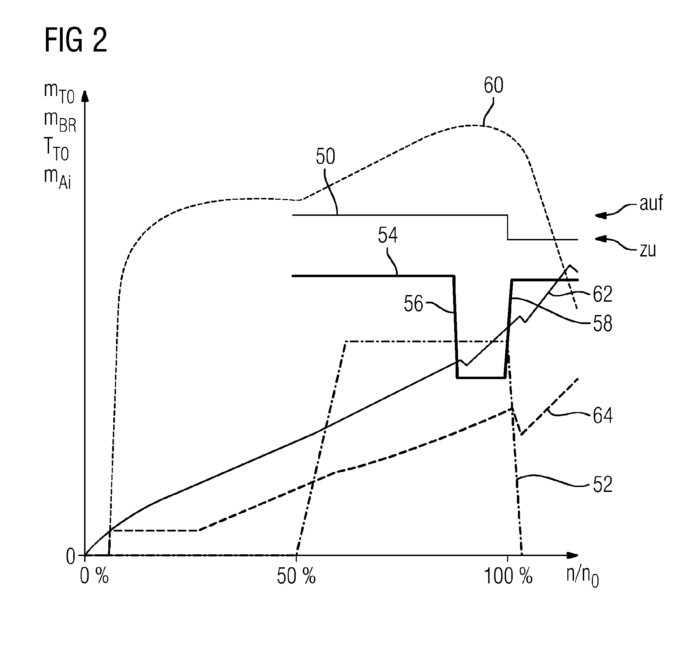

FIG 2 zeigt in einem Diagramm die Abhängigkeit des Abgas-Massenstroms m_{To} der Turbine, des Massenstroms m_{BR} des Brennstoffs, der Abgastemperatur T_{To}, der IGV-Stellung und die Stellung der Abblaseklappen sowie der rückgeführte Anteil m_{Ai} der Verdichterendluft in den Ansaugkanal 16, alles in Abhängigkeit von der relativen Drehzahl n/n₀. Die relative Drehzahl berechnet sich aufgrund der tatsächlich aktuell vorhandenen Drehzahl n in Bezug auf die Nenndrehzahl n₀.

Eine erste Kennlinie 50 zeigt die Stellung der Abblaseklappen für den hier im Detail betrachteten Drehzahlbereich von 50% bis 100% Nenndrehzahl n₀. Die zweite Kennlinie 52 zeigt den Massenstrom m_{Ai} der rückgeführten Verdichterendluft in den Ansaugkanal 16 des Verdichters 18 und eine dritte Kennlinie 54 zeigt ebenfalls für den relevanten Drehzahlbereich von 50% bis 100% Nenndrehzahl n₀ die Position der verstellbaren Einlassleitschaufeln 14 am Einlass des Verdichters 18.

Um den Ausbrand während des Anfahrens der Gasturbine 10 auf Nenndrehzahl n₀ zu erhöhen und dabei höhere Flammentemperaturen zu erreichen, wird vorzugsweise ab einer Drehzahl von 50% Nenndrehzahl n₀ - unabhängig von der Umgebungstemperatur der Gasturbine 10 - dem Ansaugkanal 16 über die Rückführleitung 46 ein Anteil der Verdichterendluft rückgeführt. Hier zeigt die Kennlinie 52 im Diagramm nach FIG 2 den Massenstrom m_{Ai} der rückgeführten Verdichterendluft in den Ansaugkanal 16 in Abhängigkeit der aktuellen Drehzahl n/n₀. Mit Erreichen einer Drehzahl von 50% Nenndrehzahl n₀ wird das Stellorgan 47 geöffnet, wobei der rückgeführte Anteil m_{Ai} der Verdichterendluft vergleichsweise schnell sein Maximum erreicht. Danach verbleibt das Ventil 47 geöffnet, bis die Nenndrehzahl n₀ erreicht wird. Anschließend schließt das Stellorgan 47, wonach die Rückführung des Anteils der entnommenen Verdichterendluft unverzüglich auf Null begrenzt wird.

Mit Hilfe dieser Maßnahme steht dem Verbrennungsprozess ein geringerer Anteil an Verbrennungsluft zur Verfügung, so dass eine höhere Flammentemperatur erreicht werden kann. Einen ähnlichen Effekt erzielt das Schließen der verstellbaren Einlassleitschaufeln 41 des Verdichters 18. Mit Erreichen einer Drehzahl von 50% Nenndrehzahl n₀ weisen die verstellbaren Einlassleitschaufeln 41 eine vorgegebene Position auf. Da insbesondere kurz vor Erreichen der Nenndrehzahl n₀ Verbrennungsschwingungen auftreten können, werden ungefähr ab einer Drehzahl von 80% Nenndrehzahl n₀ die Einlassleitschaufeln 41 so verstellt, dass der in den Verdichter 18 einströmende Massenstrom weiter reduziert wird. Dies ist durch die abfallende Flanke 56 der Kennlinie 54 dargestellt. Erst mit Erreichen der Nenndrehzahl n₀ werden dann die verstellbaren Einlassleitschaufeln 41 wieder weiter geöffnet. Dies ist durch die ansteigende Flanke 58 der Kennlinie 54 dargestellt. Nach Erreichen der Nenndrehzahl n₀ werden die Einlassleitschaufeln 41 dann gemäß dem Verstellgesetz der Gasturbine 10 eingestellt.

Durch das weitere Zudrehen der Einlassleitschaufeln 41 zwischen 80% und 100% Nenndrehzahl n₀ reduziert sich insgesamt der Massenstrom durch den Verdichter 18 und somit auch die der Verbrennung zugeführte Luftmenge.

Zudem werden die als Abblaseklappen ausgeführten Stellorgane 44, 45 erst mit Erreichen der Nenndrehzahl n₀ geschlossen, was mit der abfallenden Flanke der Kennlinie 50 dargestellt ist.

In Abhängigkeit von den voran genannten Maßnahmen stellt sich ein Abgastemperaturverlauf T_{TO} ein, welcher mit der Kennlinie 60 dargestellt ist. Zugleich ist der Abgasmassenstrom m_{TO} mit der Kennlinie 62 dargestellt und der Brennstoffmassenstrom m_{BR} mit der Kennlinie 64.

Insgesamt betrifft die Erfindung ein Verfahren zum Beschleunigen des Rotors 14 einer stationären Gasturbine 10 mit einem Verdichter 18 auf Nenndrehzahl n₀, bei dem vor Erreichen der Nenndrehzahl n₀ der Rotor 14 von einem externen Drehantrieb bis zu einer vorbestimmten Rotordrehzahl angetrieben und währenddessen gasförmiger Brennstoff innerhalb der Gasturbine 10 bei einer ersten Rotordrehzahl gezündet und danach der Gasturbine 10 kontinuierlich zugeführte gasförmige Brennstoff zu einem den Rotor 14 antreibenden Heißgas M verbrannt wird und Verdichterluft 34 durch mindestens eine Abblaseleitung 42, 43 in einen Abgaskanal 26 der Gasturbine 10 abgeblasen wird. Um einerseits unerwünschte Verbrennungsschwingungen während des Hochfahrens zu vermeiden und andererseits gleichzeitig den Versorgungsdruck im Erdgasversorgungsnetz weiter reduzieren zu können, ist vorgesehen, dass bis zum Erreichen der Nenndrehzahl n₀ ein Anteil m_{Ai} der Verdichterendluft in einem Ansaugkanal 16 des Verdichters 18 rückgeführt wird und der Massenstrom durch den Verdichter kleiner ist als 60% des Nennmassenstroms bei Nennlast der Gasturbine 10.

## Patentansprüche

1. Verfahren zum Beschleunigen des Rotors (14) einer stationären Gasturbine (10) mit einem Verdichter (18) auf Nenndrehzahl (n₀),
bei dem vor Erreichen der Nenndrehzahl (n₀)
- der Rotor (14) von einem externen Drehantrieb bis zu einer vorbestimmten Rotordrehzahl angetrieben und währenddessen gasförmiger Brennstoff innerhalb der Gasturbine (10) bei einer ersten Rotordrehzahl gezündet und danach der der Gasturbine (10) kontinuierlich zugeführte gasförmige Brennstoff zu einem den Rotor (14) antreibenden Heißgas (M) verbrannt wird, und
- Verdichterluft durch mindestens eine Abblaseleitung (42, 43) in einen Abgaskanal (26) der Gasturbine (10) abgeblasen wird,
**dadurch gekennzeichnet, dass**
zur Erhöhung der Verbrennungstemperatur
bis zum Erreichen der Nenndrehzahl (n₀)
- ein Anteil (m_{Ai}) der Verdichterendluft in einen Ansaugkanal (16) des Verdichters (18) rückgeführt wird und
- der Massenstrom durch den Verdichter (18) kleiner ist als 60%,
vorzugsweise 50% des Nennmassenstroms.

2. Verfahren nach Anspruch 1,
bei dem die Rückführung des Anteils (m_{Ai}) von Verdichterendluft in den Ansaugkanal (16) unabhängig von der Umgebungstemperatur erfolgt.

3. Verfahren nach Anspruch 1 oder 2,
bei dem die Rückführung des Anteils (m_{Ai}) von Verdichterendluft in den Ansaugkanal (16) erst ab einer Drehzahl von 50% der Nenndrehzahl beginnt.

4. Verfahren nach Anspruch 1, 2 oder 3,
bei dem zur Beschleunigung des Rotors (14) auf Nenndrehzahl (n₀) nur gasförmiger Brennstoff verbrannt wird und erst nach Erreichen der Nenndrehzahl (n₀) mit der Beendigung des Abblasens begonnen wird.
